# EUROPÄISCHE PATENTSCHRIFT

(11) **EP 1 946 999 B1**
(45) Veröffentlichungstag und Bekanntmachung des Hinweises auf die Patenterteilung: **21.12.2011**
(21) Anmeldenummer: 08000842.8
(22) Anmeldetag: 17.01.2008
(51) Int. Cl.: B62J 15/00, B62J 15/02

(54) **Radschützer für ein Fahrrad**
Mudguard for bicycle
Garde-boue pour bicyclette

(30) Priorität: 19.01.2007 DE 202007000820 U
(43) Veröffentlichungstag der Anmeldung: 23.07.2008
(60) Teilanmeldung: 10004203.5
(73) Patentinhaber: sks metaplast Scheffer-Klute GmbH, 59846 Sundern (DE)
(72) Erfinder: Kordes, Sven, 59846 Sundem (DE); Grabski, Karsten, 58739 Wickede/ Ruhr (DE)
(74) Vertreter: Basfeld, Rainer

(56) Entgegenhaltungen:
- EP-A- 1 201 533
- CN-Y- 2 571 653
- DE-U1- 9 108 780
- DE-U1- 9 311 363
- DE-U1- 20 108 107
- DE-U1- 20 306 363
- DE-U1-202004 002 073
- DE-U1-202004 002 922
- FR-A- 2 646 394
- GB-A- 252 288
- GB-A- 2 229 978
- GB-A- 2 285 419
- GB-A- 2 393 166
- GB-A- 191 022 510
- US-A- 5 961 136
- US-A1- 2004 227 323

## Beschreibung

Die vorliegende Erfindung betrifft einen Radschützer für ein Fahrrad gemäß dem Oberbegriff des Anspruchs 1.

Ein Radschützer der vorgenanten Art ist aus der US 2004/0227323 A1 bekannt. Der darin beschriebene Radschützer weist eine Gruppe von drei endseitig über Gelenke miteinander verbundenen Spritzschutzteilen auf. Vermittels der Gelenke können die Winkel der einzelnen Spritzschutzteile zueinander verändert werden. An dem vorderen der Spritzschutzteile ist über ein weiteres Gelenk ein Winkelteil angebracht, das über geeignete Befestigungsmittel an einer Vorderradgabel eines Fahrrads befestigt werden kann. An dem vorderen Ende des Winkelteils ist über ein weiteres Gelenk ein weiteres Spritzschutzteil angebracht. Das Winkelteil ist so gestaltet, dass der Radschützer einen stufenförmigen Versatz aufweist, der die Anbringung des Radschützers an einem Fahrrad mit einfedernder Vorderradgabel ermöglicht.

Die DE 299 24 278 U1 zeigt einen Spritzschutz, der etwa in der Mitte einen stufenförmigen Versatz aufweist. Durch diesen stufenförmigen Versatz ist der Radschützer für den Anbau an einem Fahrrad mit einfedernder Vorderradgabel geeignet. Allerdings kann dieser Radschützer andererseits nicht für Fahrräder ohne einfedernde Vorderradgabel verwendet werden.

Das der vorliegenden Erfindung zugrunde liegende Problem ist die Schaffung eines Radschützers der eingangs genannten Art, der flexibler einsetzbar ist.

Dies wird erfindungsgemäß durch einen Radschützer der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass die einander zugewandten Enden des ersten und des zweiten Spritzschutzteils in der ersten Stellung des Befestigungsteils im wesentlichen einander gegenüberliegend angeordnet sind, wohingegen die einander zugewandten Enden des ersten und des zweiten Spritzschutzteils in der zweiten Stellung des Befestigungsteils versetzt zueinander angeordnet sind. Dabei kann beispielsweise vorgesehen sein, dass die beiden Spritzschutzteile in der ersten Stellung des Befestigungsteils einen im wesentlichen durchgehenden Spritzschutz bilden, wohingegen die beiden Spritzschutzteile in der zweiten Stellung des Befestigungsteils einen Spritzschutz mit einem stufenförmigen Versatz bilden. Durch den stufenförmigen Versatz ist der Radschützer in der zweiten Stellung des Befestigungsteils für den Anbau an einem Fahrrad mit einfedernder Vorderradgabel geeignet. Durch den im wesentlichen durchgehenden Spritzschutz ist der Radschützer in der ersten Stellung des Befestigungsteils für Fahrräder ohne einfedernde Vorderradgabel geeignet. Damit ergibt sich eine vorteilhafte Variabilität des erfindungsgemäßen Radschützers.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine Seitenansicht einer Ausführungsform eines erfindungsgemäßen Radschützers in einer ersten Stellung;
- Fig. 2: eine Draufsicht auf den Radschützer gemäß Fig. 1;
- Fig. 3: eine Schnittansicht gemäß den Pfeilen III-III in Fig. 2;
- Fig. 4: eine Seitenansicht des Radschützers gemäß Fig. 1 in einer zweiten Stellung;
- Fig. 5: eine Draufsicht auf den Radschützer gemäß Fig. 4;
- Fig. 6: eine Schnittansicht gemäß den Pfeilen VI-VI in Fig. 5.

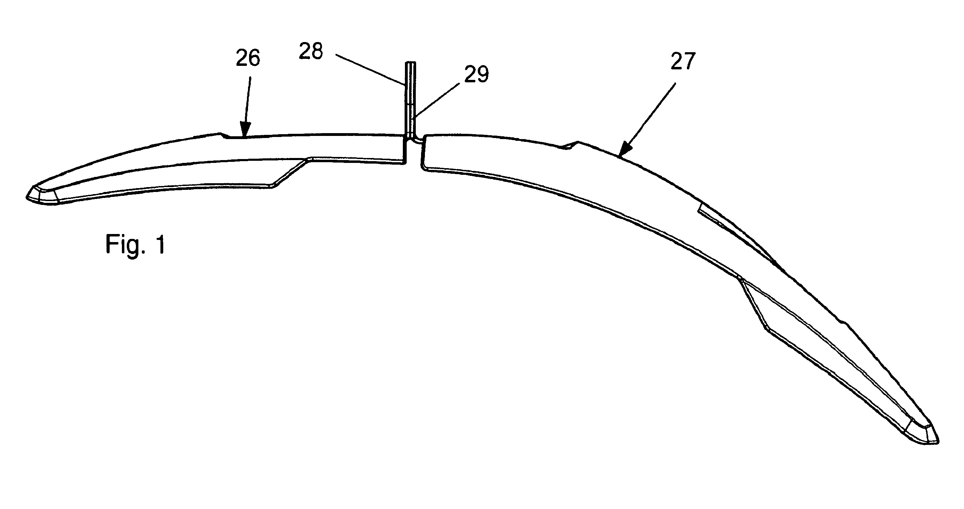

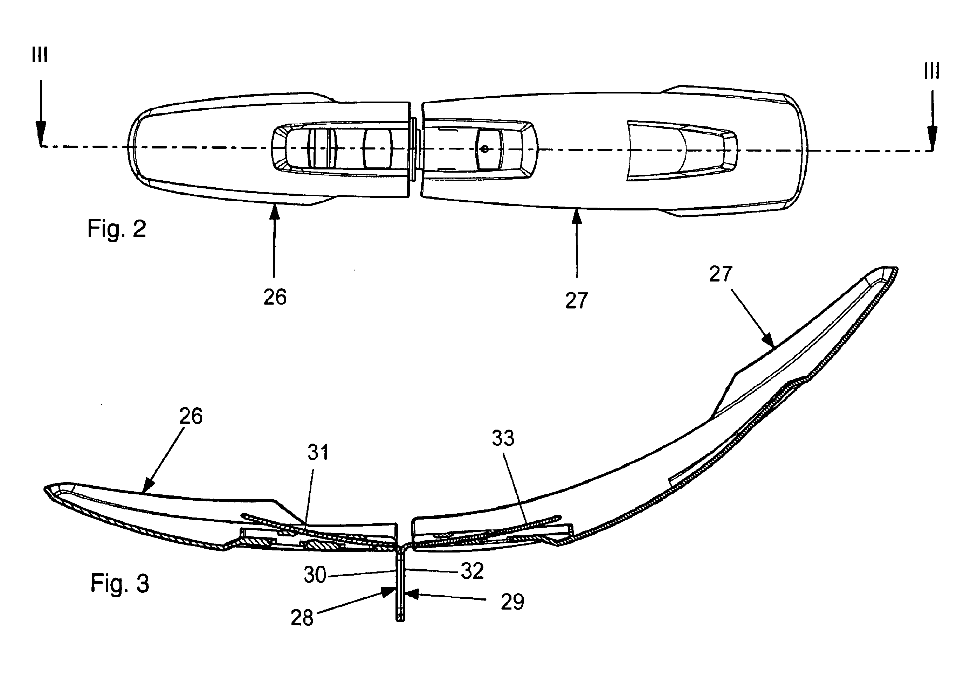

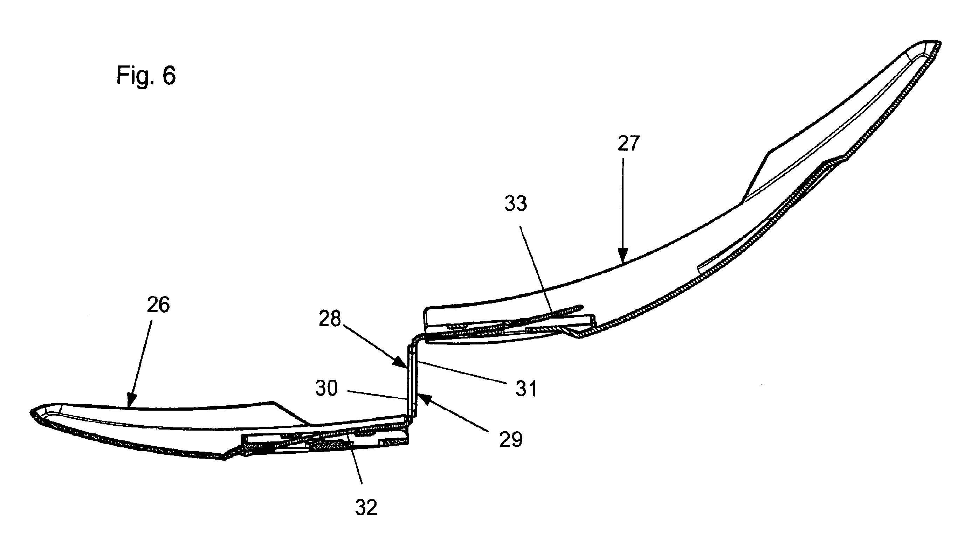

Die aus den Fig. 1 bis Fig. 6 ersichtliche Ausführungsform eines erfindungsgemäßen Radschützers umfasst ein erstes Spritzschutzteil 26 und ein zweites Spritzschutzteil 27, die über zwei winkelförmige Befestigungsteile 28, 29 aneinander und an einem Fahrrad festgelegt werden können. Aus Fig. 3 ist ersichtlich, dass ein jedes der Befestigungsteile 28, 29 winkelförmig ausgebildet ist und beispielsweise zwei Schenkel 30, 31 beziehungsweise 32, 33 aufweist, die einen Winkel von etwas mehr als 90° einschließen. Dabei können die in Fig. 3 nach links und rechts ragenden Schenkel 31, 33 der beiden Winkelteile 28, 29 in eine entsprechende Nut oder Führung oder Aufnahme oder Schiene oder dergleichen der Spritzschutzteile 26, 27 eingeschoben werden. Es ergibt sich somit eine durch Schieben oder Ziehen herstellbare beziehungsweise lösbare Verbindung zwischen den Schenkeln 31, 33 und den Spritzschutzteilen 26, 27.

Die in Fig. 3 nach unten ragenden anderen Schenkel 30, 32 der Befestigungsteile 28, 29 können jeweils ein Loch, insbesondere ein Langloch aufweisen, durch das eine Schraube hindurchragen kann. Mittels dieser Schraube können die Befestigungsteile an einem Fahrrad festgelegt werden. Es sind auch andere Befestigungsmöglichkeiten der Befestigungsteile 28, 29 an einem Fahrrad denkbar.

Aufgrund der Tatsache, dass die Befestigungsteile 28, 29 sowohl von den Spritzschutzteilen 26, 27, als auch voneinander lösbar sind, ergeben sich unterschiedliche Gestaltungsmöglichkeiten. Zum einen können die Befestigungsteile 28, 29 in einer ersten Stellung zusammengebaut werden, die aus Fig. 1 bis Fig. 3 ersichtlich ist. In dieser Stellung sind die Befestigungsteile 28, 29 derart symmetrisch aneinander befestigt, dass die Schenkel 31, 33, die die Verbindung zu den Spritzschutzteilen 26, 27 herstellen, auf gleicher Höhe oder im Wesentlichen miteinander fluchtend voneinander wegragen.

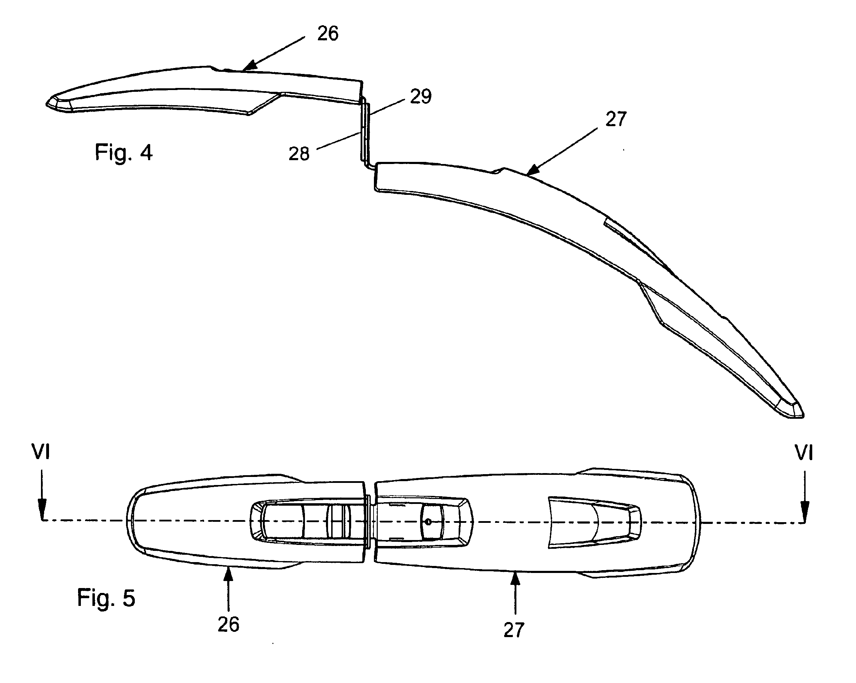

In der in den Fig. 4 bis 6 dargestellten Stellung sind die Befestigungsteile 28, 29 derart asymmetrisch aneinander befestigt, dass die Schenkel 31, 33, die die Verbindung zu den Spritzschutzteilen 26, 27 herstellen, an unterschiedlichen Enden beziehungsweise in unterschiedlichen Höhen von den miteinander verbundenen Befestigungsteilen 28, 29 wegragen. Auf diese Weise ergibt sich in der zweiten Stellung (siehe Fig. 4 bis Fig. 6) ein stufenförmiger Versatz in dem Radschützer, so dass der Radschützer für die Verwendung mit einem Fahrrad mit einfedernder Vorderradgabel geeignet ist. Demgegenüber ergibt sich in der ersten Stellung gemäß Fig. 1 bis Fig. 3 ein Radschützer mit einem im Wesentlichen durchgehenden Spritzschutzteil, das keinen stufenförmigen Versatz aufweist.

## Patentansprüche

1. Radschützer für ein Fahrrad, insbesondere für ein Vorderrad, umfassend
- Befestigungsmittel, mittels denen der Radschützer an einem Teil eines Fahrrades anbringbar ist;
- ein erstes und ein zweites Spritzschutzteil (26, 27), die mit den Befestigungsmitteln verbunden oder verbindbar sind, wobei die Befestigungsmittel mindestens ein Befestigungsteil (28, 29) umfassen, das in einer ersten Stellung und in einer zweiten Stellung eingebaut werden kann, und wobei die Anordnung des ersten und des zweiten Spritzschutzteils (26, 27) zueinander in der ersten Stellung unterschiedlich zu der Anordnung des ersten und des zweiten Spritzschutzteils (26, 27) in der zweiten Stellung des Befestigungsteils (28, 29) ist;
**dadurch gekennzeichnet, dass** die einander zugewandten Enden des ersten und des zweiten Spritzschutzteils (26, 27) in der ersten Stellung des Befestigungsteils (28, 29) im wesentlichen einander gegenüberliegend angeordnet sind, wohingegen die einander zugewandten Enden des ersten und des zweiten Spritzschutzteils (26, 27) in der zweiten Stellung des Befestigungsteils (28, 29) versetzt zueinander angeordnet sind.

2. Radschützer nach Anspruch 1, **dadurch gekennzeichnet, dass** die beiden Spritzschutzteile (26, 27) in der ersten Stellung des Befestigungsteils (28, 29) einen im wesentlichen durchgehenden Spritzschutz bilden, wohingegen die beiden Spritzschutzteile (26, 27) in der zweiten Stellung des Befestigungsteils (28, 29) einen Spritzschutz mit einem stufenförmigen Versatz bilden.

3. Radschützer nach einem der Ansprüche 1 oder 2, **dadurch gekennzeichnet, dass** das mindestens eine Befestigungsteil (28, 29) winkelförmig ausgebildet ist, und insbesondere einen Winkel von etwa 90° oder mehr als 90° aufweist.

4. Radschützer nach einem der Ansprüche 1 bis 3, **dadurch gekennzeichnet, dass** sich die unterschiedlichen Stellungen des mindestens einen Befestigungsteils (28, 29) durch Drehung um 180° ergeben.

5. Radschützer nach einem der Ansprüche 1 bis 4, **dadurch gekennzeichnet, dass** das mindestens eine Befestigungsteil (28, 29) zumindest teilweise in eine Nut oder Schiene eines der Spritzschutzteile (26, 27) einschiebbar ist.

6. Radschützer nach einem der Ansprüche 1 bis 5, **dadurch gekennzeichnet, dass** das mindestens eine Befestigungsteil (28, 29) mit Befestigungselementen wie Schrauben an einem Teil des Fahrrads befestigt werden kann.

7. Radschützer nach einem der Ansprüche 1 bis 6, **dadurch gekennzeichnet, dass** der Radschützer zwei Befestigungsteile (28, 29) aufweist, die insbesondere identisch ausgebildet sind.

## Claims

1. Mudguard for a bicycle, in particular for a front wheel, comprising
- fastening means which can be used to attach the mudguard to part of a bicycle;
- a first and a second splashguard part (26, 27) which are or can be connected to the fastening means, wherein the fastening means comprise at least one fastening part (28, 29) which can be fitted in a first position and in a second position, and wherein the arrangement of the first and of the second splashguard part (26, 27) with respect to each other is different in the first position to the arrangement of the first and of the second splashguard part (26, 27) in the second position of the fastening part (28, 29);
**characterized in that** the mutually facing ends of the first and of the second splashguard part (26, 27) are arranged substantially opposite each other in the first position of the fastening part (28, 29) whereas the mutually facing ends of the first and of the second splashguard part (26, 27) are offset with respect to each other in the second position of the fastening part (28, 29).

2. Mudguard according to Claim 1, **characterized in that** the two splashguard parts (26, 27) form a substantially continuous splashguard in the first position of the fastening part (28, 29) whereas the two splashguard parts (26, 27) form a splashguard with a step-shaped offset in the second position of the fastening part (28, 29).

3. Mudguard according to either of Claims 1 and 2, **characterized in that** the at least one fastening part (28, 29) is of angular design, and in particular has an angle of approximately 90° or more than 90°.

4. Mudguard according to one of Claims 1 to 3, **characterized in that** the different positions of the at least one fastening part (28, 29) are produced by rotation through 180°.

5. Mudguard according to one of Claims 1 to 4, **characterized in that** the at least one fastening part (28, 29) can be at least partially pushed into a groove or rail of one of the splashguard parts (26, 27).

6. Mudguard according to one of Claims 1 to 5, **characterized in that** the at least one fastening part (28, 29) can be fastened to part of the bicycle with fastening elements, such as screws.

7. Mudguard according to one of Claims 1 to 6, **characterized in that** the mudguard has two fastening parts (28, 29) which, in particular, are of identical design.

## Revendications

1. Garde-boue pour une bicyclette, en particulier pour une roue avant, comprenant
- des moyens de fixation au moyen desquels le garde-boue peut être monté sur une partie d'une bicyclette ;
- une première et une deuxième pièce de protection contre les éclaboussures (26, 27), qui sont reliées ou peuvent être reliées avec les moyens de fixation, les moyens de fixation comprenant au moins une pièce de fixation (28, 29) qui peut être installée dans une première position et dans une deuxième position, et l'agencement de la première et de la deuxième pièce de protection contre les éclaboussures (26, 27) l'une par rapport à l'autre étant différent dans la première position de l'agencement de la première et de la deuxième pièce de protection contre les éclaboussures (26, 27) dans la deuxième position de la pièce de fixation (28, 29) ;
**caractérisé en ce que** les extrémités se faisant face de la première et de la deuxième pièce de protection contre les éclaboussures (26, 27) dans la première position de la pièce de fixation (28, 29) sont disposées essentiellement en regard l'une de l'autre, tandis que les extrémités se faisant face de la première et de la deuxième pièce de protection contre les éclaboussures (26, 27) dans la deuxième position de la pièce de fixation (28, 29) sont disposées de manière décalée l'une par rapport à l'autre.

2. Garde-boue selon la revendication 1, **caractérisé en ce que** les deux pièces de protection contre les éclaboussures (26, 27) dans la première position de la pièce de fixation (28, 29) forment une protection contre les éclaboussures essentiellement continue, tandis que les deux pièces de protection contre les éclaboussures (26, 27) dans la deuxième position de la pièce de fixation (28, 29) forment une protection contre les éclaboussures avec un décalage en forme d'échelon.

3. Garde-boue selon la revendication 1 ou 2, **caractérisé en ce que** l'au moins une pièce de fixation (28, 29) est réalisée sous forme coudée, et présente en particulier un angle d'environ 90° ou de plus de 90°.

4. Garde-boue selon l'une quelconque des revendications 1 à 3, **caractérisé en ce que** les différentes positions de l'au moins une pièce de fixation (28, 29) sont obtenues par rotation de 180°.

5. Garde-boue selon l'une quelconque des revendications 1 à 4, **caractérisé en ce que** l'au moins une pièce de fixation (28, 29) peut être insérée au moins en partie dans une rainure ou un rail de l'une des pièces de protection contre les éclaboussures (26, 27).

6. Garde-boue selon l'une quelconque des revendications 1 à 5, **caractérisé en ce que** l'au moins une pièce de fixation (28, 29) peut être fixée sur une partie de la bicyclette à l'aide d'éléments de fixation comme des vis.

7. Garde-boue selon l'une quelconque des revendications 1 à 6, **caractérisé en ce que** le garde-boue comporte deux pièces de fixation (28, 29), lesquelles sont en particulier réalisées de manière identique.
